# FASCICULE DE BREVET EUROPEEN

(11) **EP 3 809 404 B1**
(45) Date de publication et mention de la délivrance du brevet: **04.05.2022**
(21) Numéro de dépôt: 20200623.5
(22) Date de dépôt: 07.10.2020
(51) Int. Cl.: G10K 11/00, G01F 1/66, G01F 15/14, G01N 29/22

(54) **SUPPORT DE CELLULE PIEZOELECTRIQUE DE TRANSDUCTEUR ULTRASONORE**
HALTERUNG FÜR EIN PIEZOELEMENT EINES ULTRASCHALLWANDLERS
SUPPORT FOR AN ULTRASOUND TRANSDUCER PIEZOELECTRIC CELL

(30) Priorité: 17.10.2019 FR 1911651
(43) Date de publication de la demande: 21.04.2021
(73) Titulaire: Sagemcom Energy & Telecom SAS, 92500 Rueil-Malmaison (FR)
(72) Inventeur: SABRAOUI, Abbas, 92500 RUEIL MALMAISON (FR)
(74) Mandataire: Lavaud, Thomas

(56) Documents cités:
- EP-A1- 1 366 341
- EP-B1- 1 366 341
- WO-A1-94/04890
- CN-U- 204 694 317
- CN-U- 206 469 925
- DE-B1- 2 934 031
- US-A1- 2011 239 780

## Description

L'invention concerne le domaine des transducteurs ultrasonores et, en particulier, des transducteurs ultrasonores intégrés dans des compteurs de fluide à ultrason.

### ARRIERE PLAN DE L'INVENTION

Lorsque l'on conçoit un compteur de fluide, on s'assure bien évidemment que les performances de la partie métrologique du compteur de fluide, obtenues alors que le compteur de fluide se trouve en opération, « sur le terrain », sont semblables à celles obtenues lors de l'étalonnage du compteur de fluide sur banc, en usine.

On doit donc tenir compte des nombreux facteurs qui sont susceptibles de perturber la mesure, voire même de la fausser complètement. Parmi ces facteurs, on trouve notamment les conditions environnementales du compteur de fluide en opération et, en particulier, la température du fluide et la pression du fluide appliquée sur la partie métrologique.

Dans le cas d'un compteur de fluide à ultrason comprenant des transducteurs ultrasonores munis chacun d'une cellule piézoélectrique, la maîtrise de l'assemblage de la cellule piézoélectrique est fondamentale pour assurer la robustesse de la partie métrologique.

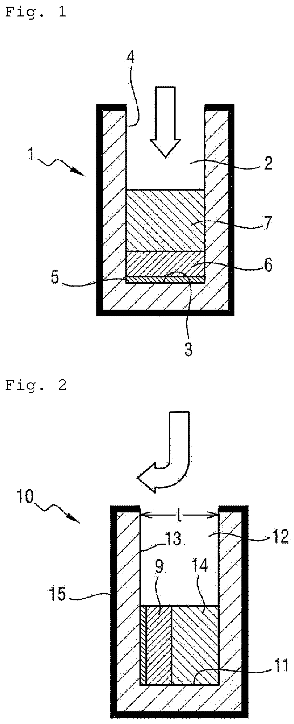

En référence à la figure 1, un transducteur ultrasonore classique 1 de compteur de fluide est assemblé selon un montage dit « horizontal ». Le transducteur ultrasonore 1 comporte un logement 2 ayant un fond 3 et une paroi interne verticale 4 qui s'étend perpendiculairement au fond 3. L'assemblage consiste à appliquer de la colle 5 sur le fond 3 du logement 2, à plaquer la face avant de la cellule piézoélectrique 6 contre le fond 3 du logement 2, et à appliquer pendant le collage une force verticale sur le support 7 (ou *backing*) de la cellule piézoélectrique 6 pour fixer la cellule piézoélectrique 6 contre le fond 3 du logement 2.

Le montage horizontal est aujourd'hui bien maîtrisé.

Il est cependant envisagé, en référence à la figure 2, de plaquer la face avant de la cellule piézoélectrique 9 d'un transducteur ultrasonore 10 non pas contre le fond 11 du logement 12 mais contre une surface de la paroi interne verticale 13 du logement 12. On parle de montage « vertical ». Il est alors très compliqué d'appliquer une force horizontale sur le support 14 pendant le collage, d'autant que la largeur 1 du logement 12 peut être très réduite (typiquement égale à 1cm).

La qualité du couplage entre la cellule piézoélectrique 9 et la paroi interne verticale 13 est très importante dans le cas du montage vertical. En effet, la pression de l'eau qui s'exerce contre la paroi externe verticale 15 tend à décoller la cellule piézoélectrique 9 de la paroi interne verticale 13. Une détérioration du couplage se traduit par une baisse du niveau de signal, voire par une perte totale du signal dans le cas où la cellule piézoélectrique 9 est complètement décollée de la paroi interne verticale 13.

Bien sûr, l'optimisation de couplage ne doit pas se faire au détriment de la précision de la mesure. On sait que, pour garantir des performances de mesure stables en fonction de la température, il est nécessaire de sélectionner attentivement tous les matériaux de tous les éléments constituant le transducteur ultrasonore 10, et notamment le ou les matériaux utilisés pour fabriquer le support 14. L'impédance acoustique du support 14 doit être la plus stable possible en fonction de la température. La matière optimale pour assurer cette stabilité de l'impédance acoustique est l'air car, du fait de l'écart d'impédance important entre la cellule piézoélectrique 9 et l'air, l'énergie transmise dans l'air est quasi nulle, que la température soit égale à 5°C ou à 70°C. Toute l'énergie produite par la cellule piézoélectrique 9 est ainsi transmise dans l'eau. Cependant, un support qui serait constitué uniquement d'air ne garantirait pas une stabilité des performances de mesure en fonction de la pression du fluide appliquée contre la paroi externe verticale 15 du logement 11 du transducteur ultrasonore 10.

Par ailleurs, il convient d'assurer que l'assemblage des éléments constituant le transducteur ultrasonore est répétable pour garantir une bonne reproductibilité des performances de mesure entre les différents transducteurs.

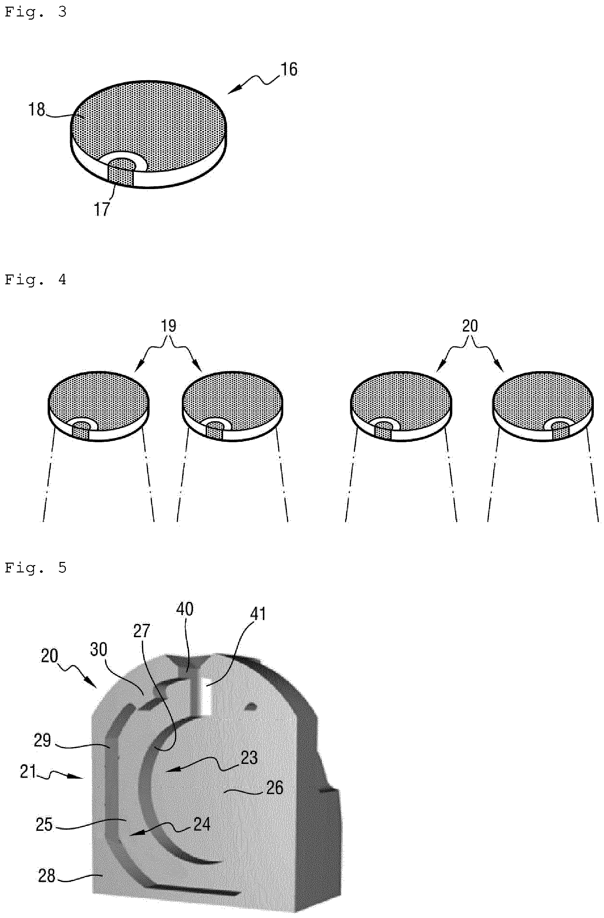

En référence à la figure 3, cette problématique est particulièrement importante dans le cas où la cellule piézoélectrique 16 comprend une première électrode 17 et une deuxième électrode 18 du type *wrap around*. Un premier fil électrique est soudé sur la première électrode 17 et un deuxième fil électrique est soudé sur la deuxième électrode 18. La forme du champ acoustique dépend de la position de la soudure, qui doit donc être maîtrisée et répétable.

Sur la figure 4, on illustre les positions angulaires des cellules piézoélectriques 19 des deux transducteurs ultrasonores d'un premier compteur, et les positions angulaires des cellules piézoélectriques 20 des deux transducteurs ultrasonores d'un deuxième compteur. On voit que, lorsque les positions angulaires sont différentes, les champs acoustiques sont différents et les performances de mesure sont elles aussi potentiellement différentes.

Le document CN 206 469 925 U dévoile un support de cellule piézoélectrique de transducteur ultrasonore de l'art antérieur.

### OBJET DE L'INVENTION

L'invention a pour objet un support de cellule piézoélectrique permettant de réaliser un montage facile et répétable d'une cellule piézoélectrique dans un transducteur ultrasonore, en particulier dans le cas d'un montage vertical, et de réaliser des mesures stables en fonction de la température et de la pression appliquée par le fluide.

### RESUME DE L'INVENTION

En vue de la réalisation de ce but, on propose un support de cellule piézoélectrique de transducteur ultrasonore selon la revendication 1.

Lorsque la cellule piézoélectrique est montée sur le support et maintenue en position par les moyens de maintien, le bord de la cellule piézoélectrique est positionné contre la surface d'appui et la cavité centrale, remplie d'air, est fermée par une partie centrale de la cellule piézoélectrique. Les mesures réalisées par un transducteur ultrasonore intégrant la cellule piézoélectrique et le support sont donc à la fois stables en température et en fonction de la pression. Les moyens de positionnement angulaire de la cellule piézoélectrique sur la surface d'appui permettent d'assurer que la position des soudures est la même sur chaque assemblage d'un support et d'une cellule piézoélectrique, ce qui rend ledit assemblage parfaitement répétable.

La surface inclinée et la différence d'épaisseur entre la portion supérieure et la portion inférieure du support facilitent grandement le montage vertical de la cellule piézoélectrique, en particulier dans un logement de largeur réduite.

On propose en outre un support tel que celui qui vient d'être décrit, dans lequel la portion inférieure du support comporte une face inférieure du support destinée à être posée sur un fond d'un logement d'un boîtier d'un transducteur ultrasonore.

On propose aussi un support tel que celui qui vient d'être décrit, dans lequel la surface d'appui et une surface externe avant de la face avant du support forment un deuxième épaulement sur la face avant du support, les moyens de maintien en position comprenant au moins une excroissance formée sur une paroi interne du support qui s'étend entre la surface externe avant et la surface d'appui.

On propose aussi un support tel que celui qui vient d'être décrit, dans lequel la surface d'appui est agencée pour accueillir une cellule piézoélectrique de section circulaire.

On propose aussi un support tel que celui qui vient d'être décrit, dans lequel la surface d'appui est agencée pour accueillir une cellule piézoélectrique de section carrée ou rectangulaire.

On propose en outre un support tel que celui qui vient d'être décrit, le support étant fabriqué dans un matériau plastique.

On propose par ailleurs un support tel que celui qui vient d'être décrit, le support étant fabriqué dans un matériau métallique.

On propose en outre un ensemble comprenant une cellule piézoélectrique et un support tel que précédemment décrit, la cellule piézoélectrique étant montée sur la surface d'appui et fermant la cavité centrale qui est remplie d'air.

On propose aussi un transducteur ultrasonore comprenant un boîtier définissant un logement, une cellule piézoélectrique et un support tel que précédemment décrit, la cellule piézoélectrique étant montée sur le support, la cellule piézoélectrique et le support étant positionnés dans le logement.

On propose de plus un transducteur ultrasonore tel que précédemment décrit, dans lequel le logement comporte un fond et une paroi interne qui s'étend depuis le fond du logement, la cellule piézoélectrique et le support étant agencés dans le logement de sorte que la cellule piézoélectrique est positionnée contre la paroi interne du logement.

On propose de plus un transducteur ultrasonore tel que précédemment décrit, dans lequel la paroi interne du logement est inclinée d'un angle compris entre 45° et 90° par rapport au fond du logement.

On propose aussi un compteur de fluide à ultrason comprenant un premier transducteur ultrasonore et un deuxième transducteur ultrasonore tels que précédemment décrits.

On propose aussi un compteur de fluide à ultrason tel que précédemment décrit, comprenant un conduit à l'intérieur duquel peut circuler un fluide, un premier logement du premier transducteur ultrasonore et un deuxième logement du deuxième transducteur ultrasonore s'étendant à l'intérieur du conduit respectivement depuis une première surface et une deuxième surface d'une paroi interne du conduit, une première cellule piézoélectrique du premier transducteur ultrasonore et une deuxième cellule piézoélectrique du deuxième transducteur ultrasonore étant situées et orientées en face et parallèlement l'une par rapport à l'autre.

On propose aussi un compteur de fluide à ultrason tel que précédemment décrit, dans lequel un premier axe longitudinal du premier logement et un deuxième axe longitudinal du deuxième logement sont inclinés par rapport respectivement à la première surface interne et à la deuxième surface interne d'un angle compris entre 45° et 90°.

On propose aussi un compteur de fluide à ultrason tel que précédemment décrit, dans lequel le premier transducteur ultrasonore et le deuxième transducteur ultrasonore sont positionnés de sorte qu'une première position du premier transducteur ultrasonore présente un premier décalage d'un côté d'un plan comprenant un axe longitudinal central du conduit, et de sorte qu'une deuxième position du deuxième transducteur ultrasonore présente un deuxième décalage de l'autre côté dudit plan.

On propose en outre un procédé d'assemblage d'un transducteur ultrasonore tel que décrit plus tôt, comprenant les étapes de :
- monter la cellule piézoélectrique sur la surface d'appui du support ;
- appliquer une colle sur une première surface d'une paroi interne du logement et/ou sur une face avant de la cellule piézoélectrique ;
- introduire la cellule piézoélectrique et le support dans le logement du transducteur, de sorte que la portion inférieure du support repose sur le fond du logement et de sorte que la cellule piézoélectrique est plaquée contre la première surface de la paroi interne du logement ;
- introduire un outil dans le logement entre une deuxième surface de la paroi interne du logement qui est située en regard de la première surface, et la face arrière du support, de sorte que l'outil glisse sur la surface inclinée du support depuis la portion supérieure vers la portion inférieure du support, et presse ainsi la cellule piézoélectrique contre la première surface de la paroi interne du logement.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig. 1] la figure 1 représente un transducteur ultrasonore assemblé selon un montage horizontal ;
[Fig. 2] la figure 2 représente un transducteur ultrasonore assemblé selon un montage vertical ;
[Fig. 3] la figure 3 représente une cellule piézoélectrique comprenant des électrodes du type *wrap around* ;
[Fig. 4] la figure 4 représente les cellules piézoélectriques de deux compteurs de fluide ;
[Fig. 5] la figure 5 est une vue en perspective d'une face avant d'un support de cellule piézoélectrique selon l'invention ;
[Fig. 6] la figure 6 est une vue en perspective d'une face arrière du support ;
[Fig. 7] la figure 7 est une vue en perspective d'une face avant du support sur lequel est montée une cellule piézoélectrique ;
[Fig. 8] la figure 8 est une vue en perspective d'une portion supérieure du support sur lequel est montée la cellule piézoélectrique ;
[Fig. 9] la figure 9 est une vue en coupe du support et de la cellule piézoélectrique, selon un plan perpendiculaire aux faces de la cellule piézoélectrique ;
[Fig. 10] la figure 10 représente des étapes d'un procédé d'assemblage du transducteur ultrasonore ;
[Fig. 11] la figure 11 est une vue en coupe schématique, selon un plan vertical, d'un conduit et de deux transducteurs ultrasonores d'un compteur d'eau ;
[Fig. 12] la figure 12 est une vue similaire à la figure 11, mais de dessus.

### DESCRIPTION DETAILLEE DE L'INVENTION

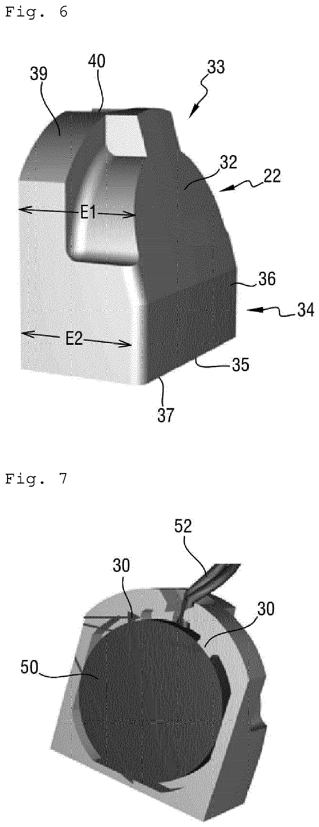

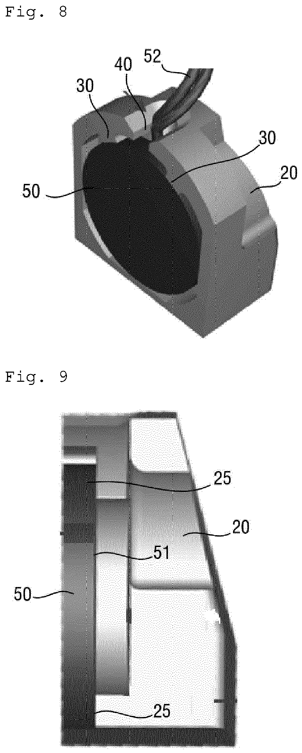

En référence aux figures 5 à 9, un support de cellule piézoélectrique selon l'invention 20 comporte une face avant 21 et une face arrière 22.

La face avant 21 comprend un premier épaulement 23 et un deuxième épaulement 24.

Le premier épaulement 23 définit une surface d'appui 25, un fond d'une cavité centrale 26, et une première paroi interne 27 qui s'étend perpendiculairement depuis le fond de la cavité centrale 26 jusqu'à la surface d'appui 25. La cavité centrale 26 est délimitée par le fond et par la première paroi interne 27.

La surface d'appui 25 a une forme annulaire et entoure la cavité centrale 26.

La surface d'appui 25, une surface externe avant 28 et une deuxième paroi interne 29 forment le deuxième épaulement 24. La deuxième paroi interne 29 s'étend perpendiculairement depuis la surface d'appui 25 jusqu'à la surface externe avant 28. La surface externe avant 28 entoure la surface d'appui 25.

Le fond de la cavité centrale 26, la surface d'appui 25 et la surface externe avant 28 sont des surfaces coaxiales, parallèles entre elles, et sont disposées dans cet ordre de manière successive depuis le fond de la cavité centrale 26 jusqu'à l'extérieur du support 20.

Le support 20 comprend de plus deux excroissances 30 qui s'étendent chacune radialement, selon leur longueur, depuis la deuxième paroi interne 29 sur la surface d'appui 25. Chaque excroissance 30 a pour hauteur la hauteur de la deuxième paroi interne 29 et a une longueur nettement inférieure à la largeur de la surface d'appui 25.

La face arrière 22 comprend quant à elle une surface inclinée 32 qui confère à une portion supérieure 33 du support 20 une première épaisseur El inférieure à une deuxième épaisseur E2 d'une portion inférieure 34 du support 20.

La portion inférieure 34 du support 20 comprend une face inférieure 35 du support 20 qui est une surface plane.

La portion inférieure 34 du support 20 comprend aussi une surface plane arrière 36 située sur la face arrière 22, et qui est perpendiculaire à la face inférieure 35. L'intersection entre la face inférieure 35 et la surface plane arrière 36 forme un bord inférieur arrière 37 du support 20.

La surface inclinée 32 de la face arrière 22 s'étend depuis la surface plane arrière 36 jusqu'à une paroi latérale externe supérieure 39 de la portion supérieure 33 du support 20. La paroi latérale externe supérieure 39 présente une forme arrondie vers l'extérieur du support 20. La paroi latérale externe supérieure 39 est donc située à l'opposé de la face inférieure 35. L'inclinaison de la surface inclinée 32, c'est-à-dire l'angle entre la surface inclinée 32 et la surface plane arrière 36, est comprise entre 5° et 85°, avantageusement entre 35° et 55°.

Un trou 40, ayant la forme d'une fente, est formée dans une partie centrale de la paroi latérale externe supérieure 39 du support 20. Le trou 40 s'étend depuis la surface d'appui 25 jusqu'à la surface externe avant 28 (et donc débouche sur l'extérieur), et traverse la paroi latérale externe supérieure 39 pour déboucher dans une rainure 41 qui s'étend radialement sur la surface d'appui 25 entre les deux excroissances 30.

On remarque que la portion supérieure 33 du support 20 est évidée au niveau de la paroi latérale externe supérieure 39, de part et d'autre de la partie centrale dans laquelle est formée le trou 40. Ces évidements ont pour résultat que l'épaisseur de la matière qui forme le support 20 est sensiblement la même sur une grande partie du support 20. Ceci est particulièrement avantageux au cours de la fabrication du support 20 lorsque le support 20 est fabriqué avec une technique de moulage par injection.

Le support 20 est ici fabriqué en plastique, par exemple en PPS, PEEK, PPO ou PA. Le support 20 pourrait aussi être fabriqué en métal, par exemple en inox, en laiton ou en bronze.

Une cellule piézoélectrique 50 est montée sur la surface d'appui 25. Plus précisément, les bords d'une face arrière 51 de la cellule piézoélectrique 50 sont appliqués contre la surface d'appui 25. La cellule piézoélectrique 50 a la forme d'une pastille : elle a une section circulaire et une épaisseur qui est nettement inférieure à son rayon. Lorsque la cellule piézoélectrique 50 est montée sur le support 20, la cellule piézoélectrique 50 et la cavité centrale 26 sont coaxiales.

Le diamètre de la cellule piézoélectrique 50 est légèrement inférieur au diamètre externe de la surface d'appui 25. La cellule piézoélectrique 50 a un diamètre typiquement compris entre 2mm et 50mm.

Le support 20 comporte des moyens de maintien de la cellule piézoélectrique 50 sur la surface d'appui 25. Les moyens de maintien comprennent ici les deux excroissances 30. La somme du diamètre de la cellule piézoélectrique 50 et de la longueur des excroissances 30 est très proche du diamètre externe de la surface d'appui 25, de sorte que, lorsque la cellule piézoélectrique 50 est montée sur la surface d'appui 25, elle vient en appui radial contre les excroissances 30 qui la maintiennent immobile.

Le support 20 comporte de plus des moyens de positionnement angulaire de la cellule piézoélectrique 50 sur la surface d'appui 25. Les moyens de positionnement angulaire comprennent ici un passage pour des fils électriques 52 soudés sur des électrodes de la cellule piézoélectrique 50. Le passage comporte le trou 40 qui traverse la paroi latérale externe supérieure 39 de la portion supérieure 33 du support 20, ainsi que la rainure 41. Les moyens de positionnement angulaire comprennent aussi les fils électriques 52 eux-mêmes.

Ainsi, lorsque la cellule piézoélectrique 50 est montée sur le support 20, les fils électriques 52 sont insérés dans le trou 40 et, du fait de la faible largeur du trou 50, sensiblement égale au diamètre des fils 52, les fils 52 et le trou 40 permettent de centrer la cellule piézoélectrique 50 et de la maintenir dans une position angulaire fixe. L'orientation des fils électrique 52 et donc la position des soudures sont maîtrisées, ce qui permet une meilleure reproductibilité entre les différents produits.

Lorsque la cellule piézoélectrique 50 est montée sur le support 20, les bords de la cellule piézoélectrique 50 sont posés sur la surface d'appui 25, ce qui assure une très bonne stabilité des mesures en fonction de la pression de l'eau.

De plus, lorsque la cellule piézoélectrique 50 est montée sur le support 20, elle ferme la cavité centrale 26 qui est remplie d'air.

Cette cavité centrale 26 remplie d'air permet à la cellule piézoélectrique 50 de vibrer librement et garantit des performances acoustiques stables entre une basse température (par exemple égale à 0°C) et une température élevée (par exemple égale à 70°C).

On sait que la répartition de l'énergie produite par la cellule piézoélectrique 50 obéit à une loi gaussienne, c'est-à-dire que la plus grande partie de l'énergie est générée depuis une partie centrale de la cellule piézoélectrique 50. Ainsi, le fait que les bords de la cellule piézoélectrique 50 soient posés sur la surface d'appui 25 ne pénalise pas les performances de la cellule piézoélectrique 50.

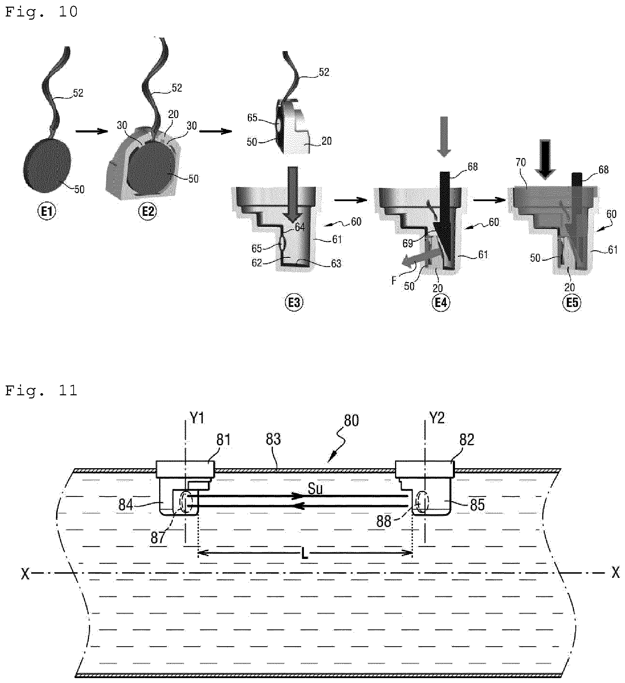

On décrit maintenant, en référence à la figure 10, un procédé d'assemblage du transducteur ultrasonore comprenant un support 20 selon l'invention.

Les fils électriques 52 sont tout d'abord soudés sur les électrodes de la cellule piézoélectrique 50 (étape E1). Puis, la cellule piézoélectrique 50 est montée sur le support 20, les fils électriques 52 étant insérés dans le trou 40 (étape E2).

Le transducteur ultrasonore 60 comporte un boîtier 61 comprenant un logement longitudinal 62.

Le logement 62 comprend un fond 63 et une paroi interne verticale 64 qui s'étend depuis le fond 63 du logement 62 perpendiculairement au fond 63. Une goutte de colle 65 est appliquée sur une première surface de la paroi interne verticale 64 du logement 62 (et/ou sur la face avant de la cellule piézoélectrique 50). La cellule piézoélectrique 50 et le support 20 sont alors insérés dans le logement 62, de sorte que la face inférieure 35 de la portion inférieure 34 du support 20 repose sur le fond 63 du logement 62 et de sorte que la face avant de la cellule piézoélectrique 50 est plaquée contre la paroi interne verticale 64 du logement 62 (étape E3) .

Puis, un outil 68 est inséré dans le logement 62 entre une deuxième surface de la paroi interne verticale 64 du logement 62, qui est située en face de la première surface, et la face arrière 22 du support, de sorte que l'outil glisse sur la surface inclinée 32 depuis la portion supérieure 33 du support 20 vers la portion inférieure 34. L'insertion de l'outil 68 est donc permise par la différence d'épaisseur entre la portion supérieure 33 et la portion supérieure 34, qui est due à la surface inclinée 32.

L'outil 68 presse ainsi la cellule piézoélectrique 50 contre la première surface de la paroi interne verticale 64 du logement 62 en générant une force F perpendiculaire à la surface inclinée 32 de la face arrière 22 du support 20 (étape E4).

Avantageusement, l'outil comporte lui-même une surface inclinée 69 ayant un angle d'inclinaison égal ou proche de l'angle d'inclinaison de la surface inclinée 32 du support 20.

Puis, on remplit de résine 70 le boîtier 61 du transducteur ultrasonore 60. L'outil 68 utilisé pour l'insertion et le collage du support 20 peut rester ou non en place dans le boîtier 61 du transducteur ultrasonore 60 pendant (et donc après) le résinage (étape E5).

Il est possible d'ajouter des rainures sur la surface de la paroi interne verticale 64 du logement 62 du transducteur ultrasonore 60 pour améliorer l'adhérence de la résine sur cette paroi interne, qui est généralement fabriquée en plastique. On améliore ainsi l'étanchéité du transducteur ultrasonore 60 ainsi que la tenue à la pression de l'eau.

On peut aussi ajouter des trous dans l'outil 68 utilisé pour l'insertion et le collage du support, de manière à améliorer l'adhérence de la résine. On renforce ainsi la partie située à l'arrière de la cellule piézoélectrique du transducteur ultrasonore, ce qui permet d'améliorer la résistance aux chocs et la tenue à la pression de l'eau.

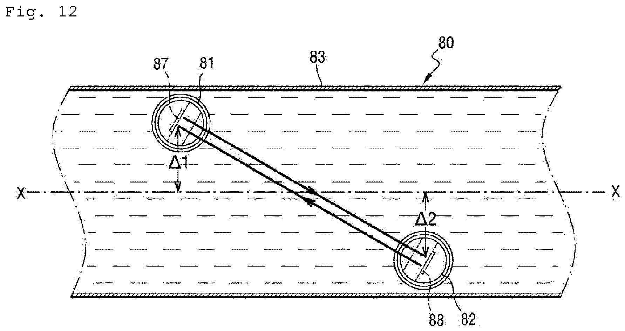

On décrit maintenant, en référence aux figures 11 et 12, la manière dont sont intégrés dans le compteur d'eau à ultrason 80 un premier transducteur ultrasonore 81 et un deuxième transducteur ultrasonore 82.

Le premier transducteur ultrasonore 81 et le deuxième transducteur ultrasonore 82 agissent successivement comme un émetteur et comme un récepteur de signaux ultrasonores de mesure Su, qui parcourent dans le conduit 83 un trajet de longueur définie L. On estime à partir de ces signaux ultrasonores de mesure Su la vitesse de l'eau qui circule dans le conduit 83 du compteur d'eau à ultrason 80.

Le premier transducteur ultrasonore 81 et le deuxième transducteur ultrasonore 82 sont tous deux montés en saillant dans le conduit depuis une paroi interne du conduit 83.

Sur la figure 11, on voit que le premier transducteur ultrasonore 81 et le deuxième transducteur ultrasonore 82 s'étendent tous deux respectivement depuis une première surface et une deuxième surface d'une portion supérieure de la paroi interne du conduit 83, mais une autre configuration serait possible. Le premier transducteur ultrasonore 81 pourrait par exemple s'étendre depuis une première surface de la portion supérieure de la paroi interne du conduit 83 et le deuxième transducteur ultrasonore depuis une deuxième surface de la portion inférieure de la paroi interne du conduit 83.

Le premier logement 84 du premier transducteur ultrasonore 81 et le deuxième logement 85 du deuxième transducteur ultrasonore 82 s'étendent donc tous deux à l'intérieur du conduit 83.

Ici, on voit que le premier logement 84 et le deuxième logement 85 sont positionnés verticalement, ce qui explique l'intérêt du montage vertical de la cellule piézoélectrique et du support. Ainsi, un premier axe longitudinal Y1 du premier logement 85 et un deuxième axe longitudinal Y2 du deuxième logement 86 sont tous deux inclinés par rapport respectivement à la première surface de la portion supérieure de la paroi interne du conduit 83 et à la deuxième surface de la portion supérieure de la paroi interne du conduit 83, d'un angle égal à 90°. Cet angle pourrait être différent et par exemple être compris entre 45° et 90°.

Sur la figure 12, on voit que le premier transducteur ultrasonore 81 et le deuxième transducteur ultrasonore 82 ne sont pas alignés selon un axe longitudinal central X du conduit 83. Au contraire, on voit que le premier transducteur ultrasonore 81 et le deuxième transducteur ultrasonore 82 sont positionnés de sorte qu'une première position du premier transducteur ultrasonore 81 présente un premier décalage Δ1 d'un côté d'un plan comprenant l'axe longitudinal central X du conduit 83, et de sorte qu'une deuxième position du deuxième transducteur ultrasonore 82 présente un deuxième décalage Δ2 de l'autre côté du plan. Ici, le plan est un plan vertical, mais il pourrait s'agir d'un plan horizontal ou incliné selon une inclinaison quelconque.

On constate sur la figure 12 que la première cellule piézoélectrique 87 du premier transducteur ultrasonore 81 et la deuxième cellule piézoélectrique 88 du deuxième transducteur ultrasonore 82 sont situées et orientées en face et parallèlement l'une par rapport à l'autre, ce qui permet d'optimiser la réception des signaux ultrasonores de mesure Su.

On note ici que la fréquence d'une cellule piézoélectrique est avantageusement comprise entre 1MHz et 4MHz lorsque le fluide est de l'eau, et entre 100kHz et 500kHz lorsque le fluide est un gaz. Dans l'application décrite ici, le fluide est de l'eau et la fréquence de chacune des première cellule piézoélectrique 87 et deuxième cellule piézoélectrique 88 est égale à 2MHz.

Bien entendu, l'invention n'est pas limitée au mode de réalisation décrit mais englobe toute variante entrant dans le champ de l'invention telle que définie par les revendications.

On a vu ici que le support selon l'invention est très avantageux dans le cas d'un « montage vertical », c'est-à-dire dans le cas où la cellule piézoélectrique est montée contre une paroi interne d'un logement perpendiculaire au fond dudit logement. Cette paroi interne pourrait être incliné par rapport au fond du logement d'un angle différent, par exemple compris entre 45° et 90°.

La cellule piézoélectrique n'a pas nécessairement une section circulaire mais pourrait avoir une section différente, par exemple carrée ou rectangulaire.

Les moyens de maintien pourraient être différents de ceux présentés ici.

Le compteur de fluide dans lequel sont intégrés les transducteurs ultrasonores n'est bien sûr pas nécessairement un compteur d'eau, mais peut être un compteur d'un fluide différent, par exemple un compteur de gaz ou de pétrole.

Les matériaux utilisés pour fabriquer le support peuvent bien sûr être différents des matériaux cités.

Dans le compteur d'eau, le trajet de longueur définie L est un trajet rectiligne. Cependant, tout type de trajet de longueur définie peut être utilisé, avec éventuellement un ou des réflecteurs, miroirs, etc.

## Revendications

1. Support de cellule piézoélectrique de transducteur ultrasonore, comportant une face avant (21) sur laquelle sont formés :
- un premier épaulement (23) qui définit une surface d'appui (25) et un fond d'une cavité centrale (26) entourée par la surface d'appui, ladite surface d'appui (25) étant configurée pour supporter les bords d'une face arrière d'une cellule piézoélectrique (50);
- des moyens de maintien (30) de la cellule piézoélectrique sur ladite surface d'appui ;
le support étant **caractérisé en ce qu'**il comprend:
- un trou (40) formé au travers dudit premier épaulement et configuré pour fournir un passage pour des fils électriques de la cellule piézoélectrique ;
et une face arrière (22) comprenant une surface plane et inclinée (32) par rapport à la face avant, qui confère à une première portion (33) située à une première extrémité du support (20) une première épaisseur (E1) entre la face avant et la face arrière inférieure à une deuxième épaisseur (E2) entre la face avant et la face arrière d'une deuxième portion (34) située à une deuxième extrémité du support (20) opposée à la première extrémité.

2. Support selon la revendication 1, dans lequel la deuxième portion (34) du support comporte une face (35) du support destinée à être posée sur un fond (63) d'un logement (62) d'un boîtier d'un transducteur ultrasonore.

3. Support selon l'une des revendications précédentes, dans lequel la surface d'appui (25) et une surface externe avant (28) de la face avant du support forment un deuxième épaulement (24) sur la face avant du support, les moyens de maintien en position comprenant au moins une excroissance (30) formée sur une paroi interne (29) du support qui s'étend entre la surface externe avant (28) et la surface d'appui (25) .

4. Support selon l'une des revendications précédentes, dans lequel la surface d'appui est agencée pour accueillir une cellule piézoélectrique de section circulaire.

5. Support selon l'une des revendications 1 à 3, dans lequel la surface d'appui est agencée pour accueillir une cellule piézoélectrique de section carrée ou rectangulaire.

6. Support selon l'une des revendications précédentes, le support étant fabriqué dans un matériau plastique.

7. Support selon l'une des revendications précédentes, le support étant fabriqué dans un matériau métallique.

8. Ensemble comprenant une cellule piézoélectrique (50) et un support (20) selon l'une des revendications précédentes, la cellule piézoélectrique étant montée sur la surface d'appui (25) et fermant la cavité centrale (26) qui est remplie d'air.

9. Transducteur ultrasonore (60) comprenant un boîtier (61) définissant un logement (62), une cellule piézoélectrique (50) et un support (20) selon l'une des revendications précédentes, la cellule piézoélectrique étant montée sur le support, la cellule piézoélectrique et le support étant positionnés dans le logement (62).

10. Transducteur ultrasonore selon la revendication 9, dans lequel le logement comporte un fond (63) et une paroi interne (64) qui s'étend depuis le fond du logement, la cellule piézoélectrique et le support étant agencés dans le logement de sorte que la cellule piézoélectrique est positionnée contre la paroi interne (64) du logement.

11. Transducteur ultrasonore selon la revendication 10, dans lequel la paroi interne du logement est inclinée d'un angle compris entre 45° et 90° par rapport au fond du logement.

12. Compteur de fluide à ultrason comprenant un premier transducteur ultrasonore (81) et un deuxième transducteur ultrasonore (82) selon l'une des revendications 9 à 11.

13. Compteur de fluide à ultrason selon la revendication 12, comprenant un conduit (83) à l'intérieur duquel peut circuler un fluide, un premier logement (84) du premier transducteur ultrasonore et un deuxième logement (85) du deuxième transducteur ultrasonore s'étendant à l'intérieur du conduit (83) respectivement depuis une première surface et une deuxième surface d'une paroi interne du conduit, une première cellule piézoélectrique (87) du premier transducteur ultrasonore et une deuxième cellule piézoélectrique (88) du deuxième transducteur ultrasonore étant situées et orientées en face et parallèlement l'une par rapport à l'autre.

14. Compteur de fluide à ultrason selon la revendication 13, dans lequel un premier axe longitudinal (Y1) du premier logement et un deuxième axe longitudinal (Y2) du deuxième logement sont inclinés par rapport respectivement à la première surface interne et à la deuxième surface interne d'un angle compris entre 45° et 90°.

15. Compteur de fluide à ultrason selon la revendication 14, dans lequel le premier transducteur ultrasonore (81) et le deuxième transducteur ultrasonore (82) sont positionnés de sorte qu'une première position du premier transducteur ultrasonore présente un premier décalage (Δ1) d'un côté d'un plan comprenant un axe longitudinal central (X) du conduit, et de sorte qu'une deuxième position du deuxième transducteur ultrasonore présente un deuxième décalage (Δ2) de l'autre côté dudit plan.

16. Procédé d'assemblage d'un transducteur ultrasonore selon l'une des revendications 9 à 11, comprenant les étapes de :
- monter la cellule piézoélectrique (50) sur la surface d'appui (25) du support ;
- appliquer une colle sur une première surface d'une paroi interne du logement et/ou sur une face avant de la cellule piézoélectrique ;
- introduire la cellule piézoélectrique et le support dans le logement du transducteur, de sorte que la deuxième portion (34) du support repose sur le fond du logement et de sorte que la cellule piézoélectrique (50) est plaquée contre la première surface de la paroi interne du logement ;
- introduire un outil (68) dans le logement entre une deuxième surface de la paroi interne du logement qui est située en regard de la première surface, et la face arrière (22) du support, de sorte que l'outil glisse sur la surface inclinée (32) du support depuis la première portion (33) vers la deuxième portion (34) du support, et presse ainsi la cellule piézoélectrique contre la première surface de la paroi interne (64) du logement.

## Patentansprüche

1. Träger für eine piezoelektrische Zelle eines Ultraschallwandlers, umfassend eine Vorderseite (21), auf der ausgebildet sind:
- eine erste Schulter (23), die eine Auflagefläche (25) und einen Boden eines zentralen Hohlraums (26) definiert, der von der Auflagefläche umgeben ist, wobei die genannte Auflagefläche (25) so konfiguriert ist, dass die Ränder einer Rückseite einer piezoelektrischen Zelle (50) gestützt werden;
- Haltemittel (30) zum Halten der piezoelektrischen Zelle an der genannten Auflagefläche;
wobei der Träger **dadurch gekennzeichnet ist, dass** er umfasst:
- ein Loch (40), das durch die genannte erste Schulter ausgebildet und so konfiguriert ist, dass es einen Durchgang für elektrische Leitungen der piezoelektrischen Zelle bereitstellt;
und eine Rückseite (22), die eine ebene und in Bezug auf die Vorderseite geneigte Fläche (32) umfasst, die einem ersten Abschnitt (33), der sich an einem ersten Ende des Trägers (20) befindet, eine erste Dicke (E1) zwischen der Vorderseite und der Rückseite verleiht, die kleiner als eine zweite Dicke (E2) zwischen der Vorderseite und der Rückseite eines zweiten Abschnittes (34) ist, der sich an einem zweiten Ende des Trägers (20) befindet, das dem ersten Ende entgegengesetzt ist.

2. Träger nach Anspruch 1, bei dem der zweite Abschnitt (34) des Trägers eine Fläche (35) des Trägers umfasst, die zu bestimmt ist, auf einem Boden (63) einer Aufnahme (62) eines Gehäuses eines Ultraschallwandlers platziert zu werden.

3. Träger nach einem der vorhergehenden Ansprüche, bei dem die Auflagefläche (25) und eine vordere Außenfläche (28) der Vorderseite des Trägers eine zweite Schulter (24) auf der Vorderseite des Trägers bilden, wobei die Positionshaltemittel mindestens einen Vorsprung (30) umfassen, der an einer Innenwand (29) des Trägers ausgebildet ist, die sich zwischen der vorderen Außenfläche (28) und der Auflagefläche (25) erstreckt.

4. Träger nach einem der vorhergehenden Ansprüche, bei dem die Auflagefläche so ausgebildet ist, dass sie eine piezoelektrische Zelle mit kreisförmigem Querschnitt aufnimmt.

5. Träger nach einem der Ansprüche 1 bis 3, bei dem die Auflagefläche so ausgebildet ist, dass sie eine piezoelektrische Zelle mit quadratischem oder rechteckigem Querschnitt aufnimmt.

6. Träger nach einem der vorhergehenden Ansprüche, wobei der Träger aus einem Kunststoffmaterial hergestellt ist.

7. Träger nach einem der vorhergehenden Ansprüche, wobei der Träger aus einem metallischen Material hergestellt ist.

8. Anordnung, umfassend eine piezoelektrische Zelle (50) und einen Träger (20) nach einem der vorhergehenden Ansprüche, wobei die piezoelektrische Zelle an der Auflagefläche (25) montiert ist und den zentralen Hohlraum (26), der mit Luft gefüllt ist, verschließt.

9. Ultraschallwandler (60), umfassend ein Gehäuse (61), das eine Aufnahme (62) definiert, eine piezoelektrische Zelle (50) und einen Träger (20) nach einem der vorhergehenden Ansprüche, wobei die piezoelektrische Zelle an dem Träger montiert ist, wobei die piezoelektrische Zelle und der Träger in der Aufnahme (62) positioniert sind.

10. Ultraschallwandler nach Anspruch 9, bei dem die Aufnahme einen Boden (63) und eine Innenwand (64) umfasst, die sich von dem Boden der Aufnahme erstreckt, wobei die piezoelektrische Zelle und der Träger in der Aufnahme derart angeordnet sind, dass die piezoelektrische Zelle an der Innenwand (64) der Aufnahme positioniert ist.

11. Ultraschallwandler nach Anspruch 10, bei dem die Innenwand der Aufnahme um einen Winkel zwischen 45° und 90° in Bezug auf den Boden der Aufnahme geneigt ist.

12. Ultraschallfluidzähler, umfassend einen ersten Ultraschallwandler (81) und einen zweiten Ultraschallwandler (82) nach einem der Ansprüche 9 bis 11.

13. Ultraschallfluidzähler nach Anspruch 12, umfassend eine Leitung (83), in deren Innerem ein Fluid zirkulieren kann, wobei sich eine erste Aufnahme (84) des ersten Ultraschallwandlers und eine zweite Aufnahme (85) des zweiten Ultraschallwandlers im Inneren der Leitung (83) von einer ersten Fläche bzw. einer zweiten Fläche einer Innenwand der Leitung erstrecken, wobei eine erste piezoelektrische Zelle (87) des ersten Ultraschallwandlers und eine zweite piezoelektrische Zelle (88) des zweiten Ultraschallwandlers gegenüberliegend und parallel zueinander angeordnet und ausgerichtet sind.

14. Ultraschallfluidzähler nach Anspruch 13, bei dem eine erste Längsachse (Y1) der ersten Aufnahme und eine zweite Längsachse (Y2) der zweiten Aufnahme in Bezug auf die erste Innenfläche bzw. die zweite Innenfläche um einen Winkel zwischen 45° und 90° geneigt sind.

15. Ultraschallfluidzähler nach Anspruch 14, bei dem der erste Ultraschallwandler (81) und der zweite Ultraschallwandler (82) derart positioniert sind, dass eine erste Position des ersten Ultraschallwandlers einen ersten Versatz (Δ1) auf einer Seite einer Ebene aufweist, die eine zentrale Längsachse (X) der Leitung umfasst, und derart, dass eine zweite Position des zweiten Ultraschallwandlers einen zweiten Versatz (Δ2) auf der anderen Seite der genannten Ebene aufweist.

16. Verfahren zum Zusammenbauen eines Ultraschallwandlers nach einem der Ansprüche 9 bis 11, umfassend die Schritte:
- Montieren der piezoelektrischen Zelle (50) an der Auflagefläche (25) des Trägers;
- Auftragen eines Klebstoffes auf eine erste Fläche einer Innenwand der Aufnahme und/oder auf eine Vorderseite der piezoelektrischen Zelle;
- Einbringen der piezoelektrischen Zelle und des Trägers in die Aufnahme des Wandlers, derart, dass der zweite Abschnitt (34) des Trägers auf dem Boden der Aufnahme ruht, und derart, dass die piezoelektrische Zelle (50) gegen die erste Fläche der Innenwand der Aufnahme gedrückt wird;
- Einbringen eines Werkzeugs (68) in die Aufnahme zwischen einer zweiten Fläche der Innenwand der Aufnahme, die sich gegenüber der ersten Fläche befindet, und der Rückseite (22) des Trägers, derart, dass das Werkzeug auf der geneigten Fläche (32) des Trägers von dem ersten Abschnitt (33) zum zweiten Abschnitt (34) des Trägers gleitet, und so die piezoelektrische Zelle gegen die erste Fläche der Innenwand (64) der Aufnahme drückt.

## Claims

1. A piezoelectric cell support for an ultrasonic transducer, the support including a front face (21) having formed thereon:
• a first shoulder (23) that defines a bearing surface (25) and a bottom of a central cavity (26) surrounded by the bearing surface, said bearing surface (25) being arranged to support the edges of a rear face of a piezoelectric cell (50);
• retention means (30) for holding the piezoelectric cell on said bearing surface;
the support being **characterized in that** it comprises:
• a hole (40) formed through said first shoulder and arranged to provide a passage for electric wires of the piezoelectric cell;
and a rear face (22) having a plane and sloping surface (32) inclined with respect to the front face, that gives a first portion (33) located at a first end of the support (20) a first thickness (E1) between the front face and the rear face that is less than a second thickness (E2) between the front face and the rear face of a second portion (34) located at a second end of the support situated opposite from the first portion.

2. A support according to claim 1, wherein the second portion (34) of the support includes a face (35) of the support that is for placing on a bottom (63) of a housing (62) of a casing of an ultrasonic transducer.

3. A support according to any preceding claim, wherein the bearing surface (25) and the front outer surface (28) of the front face of the support form a second shoulder (24) on the front face of the support, the retention means comprising at least one projection (30) formed on an inner wall (29) of the support that extends between the front outer surface (28) and the bearing surface (25) .

4. A support according to any preceding claim, wherein the bearing surface is arranged to receive a piezoelectric cell of section that is circular.

5. A support according to any one of claims 1 to 3, wherein the bearing surface is arranged to receive a piezoelectric cell of section that is square or rectangular.

6. A support according to any preceding claim, the support being made of a plastics material.

7. A support according to any preceding claim, the support being made of a metal material.

8. An assembly comprising a piezoelectric cell (50) and a support (20) according to any preceding claim, the piezoelectric cell being mounted on the bearing surface (25) and closing the central cavity (26), which is full of air.

9. An ultrasonic transducer (60) comprising a casing (61) defining a housing (62), a piezoelectric cell (50), and a support (20) according to any preceding claim, the piezoelectric cell being mounted on the support, the piezoelectric cell and the support being positioned in the housing (62) .

10. An ultrasonic transducer according to claim 9, wherein the housing includes a bottom (63) and an inner wall (64) that extends from the bottom of the housing, the piezoelectric cell and the support being arranged in the housing in such a manner that the piezoelectric cell is positioned against the inner wall (64) of the housing.

11. An ultrasonic transducer according to claim 10, wherein the inner wall of the housing slopes at an angle lying in the range 45° to 90° relative to the bottom of the housing.

12. An ultrasonic fluid meter including first and second ultrasonic transducers (81 and 82) according to any one of claims 9 to 11.

13. An ultrasonic fluid meter according to claim 12, including a duct (83) for passing a flow of fluid, a first housing (84) of the first ultrasonic transducer and a second housing (85) of the second ultrasonic transducer extending into the inside of the duct (83) respectively from first and second regions of an inside wall of the duct, a first piezoelectric cell (87) of the first ultrasonic transducer and a second piezoelectric cell (88) of the second ultrasonic transducer being situated and oriented facing each other and in parallel.

14. An ultrasonic fluid meter according to claim 13, wherein a first longitudinal axis (Y1) of the first housing and a second longitudinal axis (Y2) of the second housing slope respectively relative to the first and second regions of the inside wall at an angle lying in the range 45° to 90°.

15. An ultrasonic fluid meter according to claim 14, wherein the first and second ultrasonic transducers (81 and 82) are positioned so that a first position of the first ultrasonic transducer presents a first offset (Δ1) on one side of a plane containing a central longitudinal axis (X) of the duct, and in such a manner that a second position of the second ultrasonic transducer presents a second offset (Δ2) on the other side of said plane.

16. A method of assembling an ultrasonic transducer according to any one of claims 9 to 11, the method comprising the steps of:
• mounting the piezoelectric cell (50) on the bearing surface (25) of the support;
• applying an adhesive to a first surface of an inner wall of the housing and/or to a front face of the piezoelectric cell;
• inserting the piezoelectric cell and the support in the housing of the transducer, in such a manner that the bottom portion (34) of the support rests on the bottom of the housing and in such a manner that the piezoelectric cell (50) is pressed against the first surface of the inner wall of the housing;
• inserting a tool (68) into the housing between the rear face (22) of the support and a second surface of the inner wall of the housing that is situated facing the first surface, in such a manner that the tool slides on the sloping surface (32) of the support from the top portion (33) towards the bottom portion (34) of the support, thereby pressing the piezoelectric cell against the first surface of the inner wall (64) of the housing.
